Europäisches Patentamt

European Patent Office

Office européen des brevets

(19)

(11) Publication number: **0 103 903**

**A1**

(12)

# EUROPEAN PATENT APPLICATION

(21) Application number: **83109446.1**

(22) Date of filing: **22.09.83**

(51) Int. Cl.³: **G 06 F 5/00**
**H 04 L 25/00**

(30) Priority: **22.09.82 JP 163870/82**

(43) Date of publication of application:
**28.03.84 Bulletin 84/13**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Amano, Yoshikazu**
**Sanraifu-Yamato 404**
**83, Shimowada Yamato-shi(JP)**

(74) Representative: **Altenburg, Udo, Dipl.-Phys. et al,**
**Patent- und Rechtsanwälte**
**Bardehle-Pagenberg-Dost-Altenburg & Partner Postfach**
**86 06 20**
**D-8000 München 86(DE)**

(54) **Method and apparatus for transferring digital data.**

(57) A digital data transfer system for performing a transfer of data between a personal computer and an audio cassette tape recorder, wherein a modulation circuit for producing signals to be recorded in the recorder comprises a clock generator (5), a ternary counter (6), a binary counter (7), a delay circuit (8), an AND gate (9) and an exclusive-OR gate (10), while a demodulation circuit for supplying signals read out from the recorder, to the personal computer, comprises a rising edge detecting circuit (11), a falling edge detecting circuit (12), an OR gate (13), a gate pulse generator (14), an AND gate (15), a binary counter (16), an exclusive-OR gate (17), a delay circuit (18), and a D-type flip-flop (19).

FIG. 2

EP 0 103 903 A1

METHOD AND APPARATUS FOR TRANSFERRING DIGITAL DATA

The present invention relates to a digital data transfer system. Conventionally, audio cassette tape recorders have been used for storing data and programs for personal computers and the like. Signals are recorded in FSK (frequency shift keying) modulation in which a 0's bit is represented by four waves of 1200 Hz and a 1's bit is represented by eight waves of 2400 Hz. This system, however, entails a slow data transfer rate and can cause the variation in the reproduced frequencies due to errors in the recorded 1200 Hz and 2400 Hz signals and variation of the tape speed.

It is an object of the present invention to overcome the foregoing prior art problems and provide a digital data transfer system which improves the data transfer rate and enhances the reliability of demodulation.

One feature of the present invention provides a digital data transfer arrangement comprising pulse generating means for generating a pulse signal having a period with a certain high-level interval and a certain low-level interval, and level control means which does not cause a level change for one state in binary notation, but causes a level change in a certain duration of any level for another state in binary whereby two bits of binary data are carried in one period of the pulse signal.

The present invention will be apparent from the following detailed description of the preferred embodiment taken in conjunction with the accompanying drawings, in which:

Fig. 1 is a set of waveform diagrams showing the modulation signal and modulation data useful to explain the principle of the present invention;

Fig. 2 is a block diagram showing an example of the transmitter for generating the modulation signal;

Fig. 3 is a diagram showing waveforms of voltage signals observed at the principal portions of the arrangement of Fig. 2;

Fig. 4 is a block diagram showing an example of the receiver for demodulating the modulation signal; and

Fig. 5 is a diagram showing waveforms of voltage signals observed at the principal portions of the arrangement of Fig. 4.

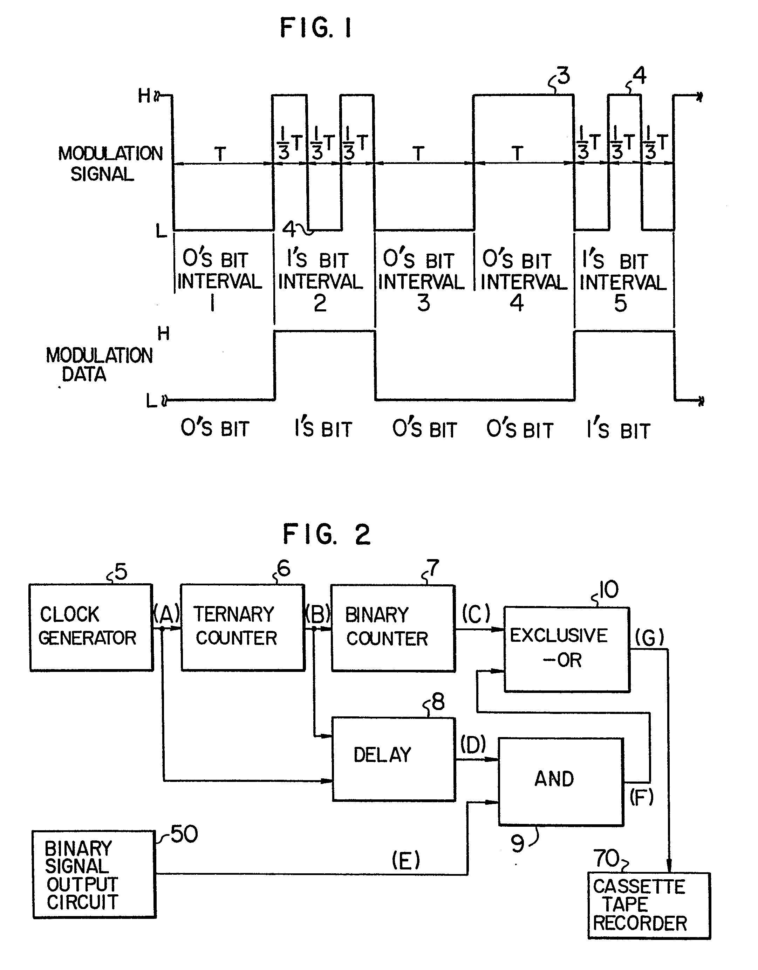

Fig. 1 shows waveforms for explaining the principle of the present invention, showing modulation data "0, 1, 0, 0, 1" and the corresponding modulation signal. In this example, where a data is transferred in a pulse signal with a period of 2T, modulation data in the state of "1" is expressed by an identification pulse signal having a pulse width of (1/3)T. In interval 2, a negative identification pulse 4 is used against the high state of the pulse signal, while in interval 5, a positive identification pulse 4 is used against the low state of the pulse signal. In intervals 1, 3 and 4 carrying 0's bits, identification pulses are not included in the data transfer period T.

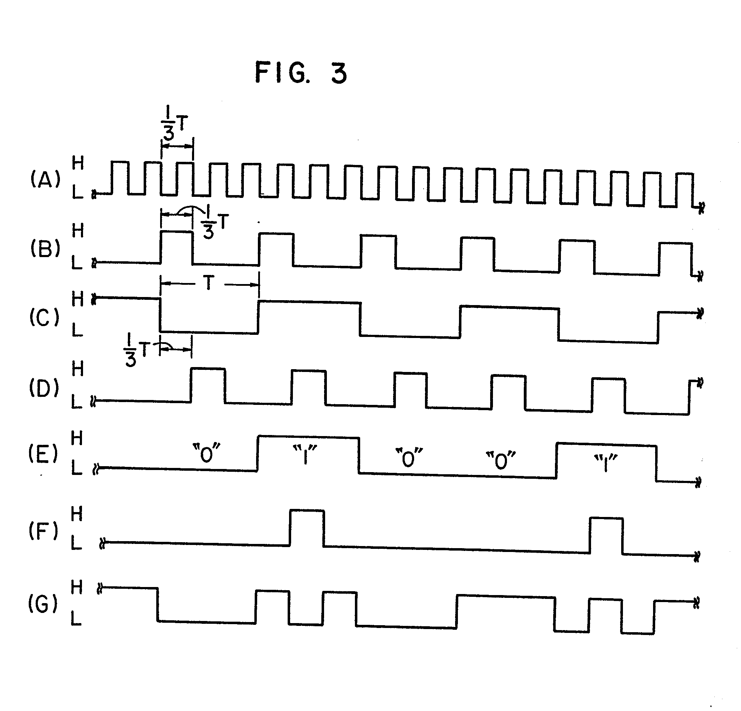

Fig. 2 shows an example of the circuit for generating the modulation signal shown in Fig. 1, and signal waveforms observed at various portions of the circuit are shown by (A) through (G) in Fig. 3. In Fig. 2, a clock generator 5 provides a signal with a period of (1/3)T as shown by (A) in Fig. 3 for the data transfer pulses having a pulse width of T. The clock signal is subjected to frequency division by a ternary counter 6 to obtain the waveform shown by (B) of Fig. 3, and it is further subjected to frequency division by a binary counter 7 to obtain the data transfer pulse train shown by (C) of Fig. 3. A delay circuit 8 made up of a JK flip-flop or two stages of RS flip-flops operates to delay the output of the ternary counter 6 (Fig. 3, (B)) by one clock, i.e., (1/3)T, to produce identification pulses shown by (D) of Fig. 3. The identification pulse signal (Fig. 3, (D)) and the modulation data signal (Fig. 3, (E)) provided by a binary signal output circuit (binary signal source) 50 which is the output circuit of a microcomputer are received by a logical AND gate 9, which produces a high output the coincident with the identification pulses only when modulation data signal is at 1's level, as shown by (F) in Fig. 3. This signal (Fig. 3, (F)) and the data transfer pulse train (Fig. 3, (C)) produced by the binary counter 7 are applied to an exclusive-OR gate 10, which produces a modulation signal including identification pulses only in portions corresponding to 1's level of the data signal, as shown by (G) in Fig. 3. The modulation signal is supplied to a cassette tape recorder 70 and recorded on the magnetic tape.

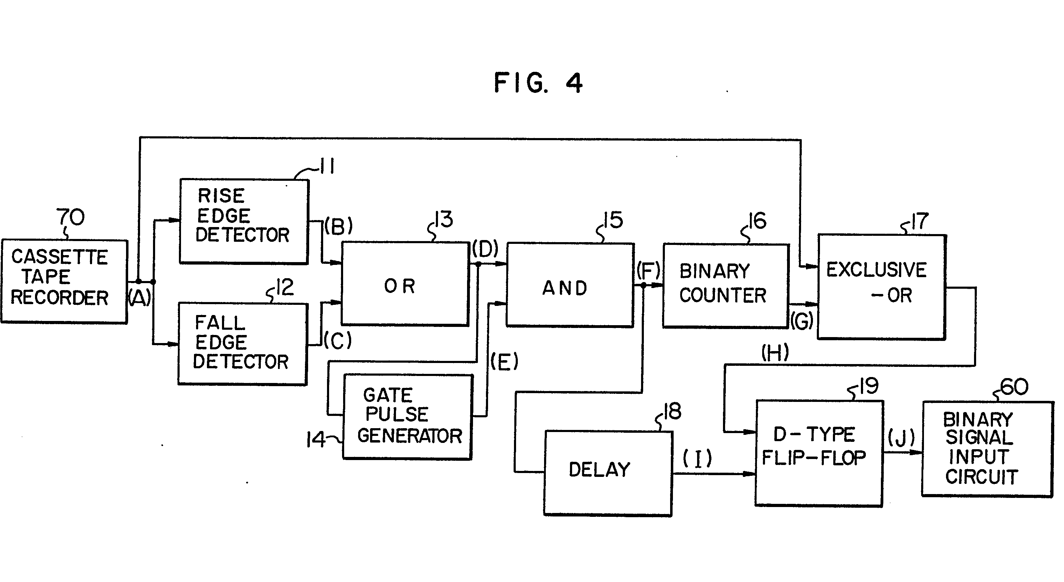

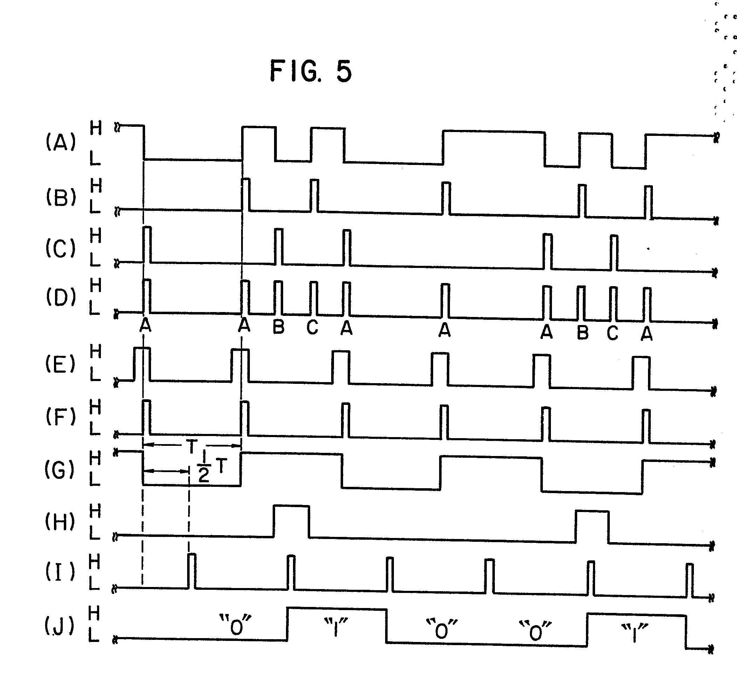

Fig. 4 shows an example of the circuit for demodulating the modulation signal produced by the circuit shown in Fig. 2, and Fig. 5 shows signal waveforms (A)-(I) observed at various portions of the circuit. Ing. Fig. 4, a rising edge detecting circuit 11 and a falling edge detecting circuit 12 receive a signal read out from the cassette tape recorder 70, as shown by (A) in Fig. 5, i.e., the signal shown by (G) in Fig. 3, and provide a rising edge detection signal and a falling edge detection signal as shown by (B) and (C) of Fig. 5, respectively. A logical OR gate 13 takes a logical sum of the signals (Fig. 5, (B) and (C)) and provides the signal shown by (D) in Fig. 5. A gate pulse generating circuit 14 having a timing counter provides a pulse signal which goes low at the falling edge of pulse A shown in Fig. 5 (D) and goes high at a time point before the succeeding pulse A and after pulse C which may not be generated, as shown in Fig. 5 (E). Since the pulse A is generated at the rising edge or falling edge of the signal shown in Fig. 3 (C), it always precedes the pulses B and C. Accordingly, pulses shown by (E) in Fig. 5 are obtained in correspondence to the pulses A. A logical AND gate 15 receives the signals shown by (D) and (E) in Fig. 5, and provides a pulse signal shown in Fig. 5 (F) which is the extraction of pulses A from the signal shown in Fig. 5 (D). The binary counter 16 receives the pulse signal to produce a data transfer pulse signal shown in Fig. 5 (G), and an exclusive-OR gate 17 receives the signals shown in Fig. 5 (A) and (G) and produces a signal (Fig. 5, (H)) having a high level corresponding to the identification pulses. A delay circuit 18 provides a pulse signal shown in Fig. 5 (H) which is derived from the pulse signal shown in Fig. 5 (F), but delayed by (1/2)T. A delay-type flip-flop 19 receives the signals shown in Fig. 5 (H) and (I) and provides signal "0,1,0,0,1" shiwn in Fig. 5 (J) which is the signal shown by (E) in Fig. 3, and it is supplied to a binary signal input circuit 60 which is the input circuit of the microcomputer.

According to the present invention, one period of the data transfer pulse signal can carry two bits of binary data, allowing a data transfer rate and recording density eight times by setting the transfer pulse signal to 1200 Hz, or 16 times by the

0103903

setup of 2400 Hz as much as the conventional FSK modulation system in which a 0's bit is expressed by four waves of 1200 Hz signal and a 1's bit is expressed by eight waves of 2400 Hz signal. Moreover, generation of the demodulation clock in response to the rising edge and falling edge of the transfer pulse signal can effectively absorb the variation in the recording speed of a recording unit, such as a tape recorder.

- 1 -

C L A I M S

1.       A digital signal transmitter comprising:

periodic signal generating means (5, 6, 7) for generating a periodic signal having an interval of a first level and an interval of a second level in one period thereof;

accepting means (9) for accepting a binary signal occurring once in each of said intervals; and

modification means (10) coupled to said periodic signal generating means and said accepting means for retaining the level of said periodic signal in its corresponding interval when the accepted binary signal is in one logical state, and modifying the level of said periodic signal to a level of adjacent intervals in part of a corresponding interval of said periodic signal when the accepted binary signal is in another logical state (Fig. 2).

2.       A digital signal receiver comprising:

reception means (70) for receiving a signal having a first interval and a second interval in one period thereof, each having an assignment of one binary signal, said first interval having a first level and said second interval having a second level when said binary signal is in one logical state, said interval having both of said first and second levels when said binary signal is in another logical state; and

discrimination means (11 - 19) connected to said reception means and adapted to discriminate whether each of said intervals has one or two levels, said discrimination means generating a signal representing one logical state when one level has been detected, and generating a signal representing another logical state when two levels have been detected.

3.      A digital data transfer method comprising:

        (a) generating a periodic signal having a first and a second interval in one period thereof each interval being assigned to one binary signal, said first interval having a first level and said second interval having a second level,

        (b) modulating said periodic signal such that a corresponding interval of the periodic signal holds its initial level when a binary signal to be transferred is in one logical state and contains both of the first and second levels when said binary signal is in another logical state, and

        (c) transferring the modulated periodic signal as binary data between a digital processing system and a recording system.

4.      A digital data transfer method for transferring binary signal data between a digital processor and a recording unit comprising the steps of:

        (a) providing a periodic bi-level signal defining predetermined periods, each period having first and second intervals, each interval being allocated to represent an individual binary signal on a bi-level basis,

(b) providing a corresponding interval of said periodic bi-level signal with a single level as initially provided when an input binary signal to be transferred is in one logical state,

(c) modulating said periodic bi-level signal so as to have double levels in a corresponding interval thereof when the input binary signal is in another logical state, and

(d) combining and transferring the results of said steps (b) and (c).

5. The method of claim 4 wherein said first and second intervals are equal in time length to each other.

FIG. 1

FIG. 2

FIG. 3

# FIG. 4

0103903

FIG. 5

# EUROPEAN SEARCH REPORT

European Patent Office

| | DOCUMENTS CONSIDERED TO BE RELEVANT | | EP 83109446.1 |
|---|---|---|---|
| Category | Citation of document with indication, where appropriate, of relevant passages | Relevant to claim | CLASSIFICATION OF THE APPLICATION (Int. Cl. ³) |
| A | CH - A5 - 574 690 (I.S.E.C.) <br> * Claim 1; fig. 1-4 * <br> -- | | G 06 F 5/00 <br> H 04 L 25/00 |
| A | DE - A1 - 3 046 803 (PHILIPS) <br> * Claim 1; fig. 1-2 * <br> ---- | | |

TECHNICAL FIELDS SEARCHED (Int. Cl. ³)

G 06 F
H 04 L

The present search report has been drawn up for all claims

| Place of search <br> VIENNA | Date of completion of the search <br> 06-12-1983 | Examiner <br> MIHATSEK |
|---|---|---|